(19) **Europäisches Patentamt**
**European Patent Office**
**Office européen des brevets**

(11) **EP 2 264 929 B1**

(12) **EUROPEAN PATENT SPECIFICATION**

(45) Date of publication and mention
of the grant of the patent:
**20.03.2013 Bulletin 2013/12**

(51) Int Cl.:
*H04L 1/00* (2006.01)    *H04L 5/00* (2006.01)
*H04L 27/26* (2006.01)

(21) Application number: **09163244.8**

(22) Date of filing: **19.06.2009**

(54) **A data transmission method using OFDM, Physical Layer Network Coding, and decoding of a signal superposition.**

Verfahren zur Datenübertragung mit einer physikalischen Schichtnetzwerkverschlüsselung

Procédé de transmission de données utilisant un codage de réseau à couche physique

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**22.12.2010 Bulletin 2010/51**

(73) Proprietor: **Deutsches Zentrum für Luft- und Raumfahrt e.V.**
**51147 Köln (DE)**

(72) Inventor: **Zorzi, Michele**
**30174 Venezia Mestre (IT)**

(74) Representative: **von Kreisler Selting Werner**
**Deichmannhaus am Dom**
**Bahnhofsvorplatz 1**
**50667 Köln (DE)**

(56) References cited:
• S. ZHANG, S. C. LIEW, P. P. LAM: "Hot Topic: Physical-Layer Network Coding" PROCEEDINGS OF ACM MOBICOM 2006, MOBICOM'06, 23 September 2006 (2006-09-23) , - 26 September 2006 (2006-09-26) pages 358-365, XP002560037 Los Angeles, California, USA ISBN: 1-59593-286-0

• ANXIN LI ET AL: "An Enhanced Denoise-and-Forward Relaying Scheme for Fading Channel With Low Computational Complexity" IEEE SIGNAL PROCESSING LETTERS, IEEE SERVICE CENTER, PISCATAWAY, NJ, US, vol. 15, 1 January 2008 (2008-01-01), pages 857-860, XP011238396 ISSN: 1070-9908

• GAO F ET AL: "On Channel Estimation for OFDM Based Two-Way Relay Networks" COMMUNICATIONS, 2009. ICC '09. IEEE INTERNATIONAL CONFERENCE ON, IEEE, PISCATAWAY, NJ, USA, vol. 1-14, 14 June 2009 (2009-06-14), pages 1-5, XP031506210 ISBN: 978-1-4244-3435-0

• IANNELLO F ET AL: "Throughput analysis of type-I HARQ strategies in Two-Way Relay Channels" 18 March 2009 (2009-03-18), INFORMATION SCIENCES AND SYSTEMS, 2009. CISS 2009. 43RD ANNUAL CONFERENCE ON, IEEE, PISCATAWAY, NJ, USA, PAGE(S) 539 - 544 , XP031468662 ISBN: 9781424427338 * the whole document *

• MORELLI M: "Timing and Frequency Synchronization for the Uplink of an OFDMA System" IEEE TRANSACTIONS ON COMMUNICATIONS, IEEE SERVICE CENTER, PISCATAWAY, NJ, US, vol. 52, no. 2, 1 February 2004 (2004-02-01), pages 296-306, XP011108429 ISSN: 0090-6778

**Description**

The invention is related to a method for transmitting data using physical layer network coding.

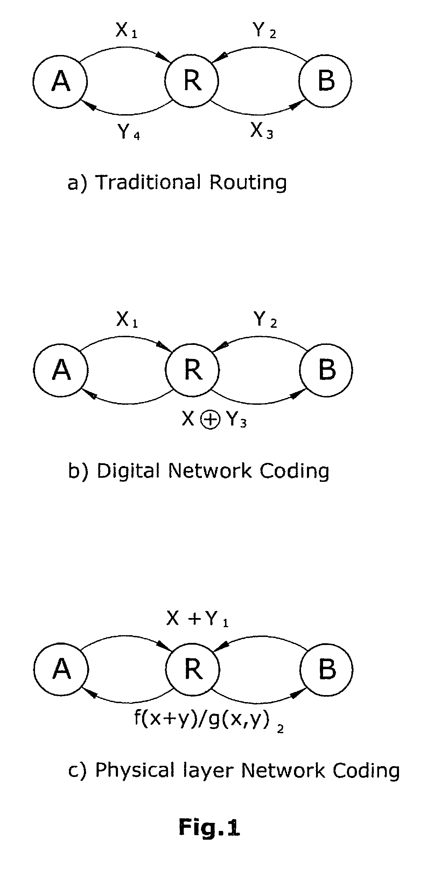

Network coding has been used to increase the throughput in wired and wireless networks. Figure 1 shows a simple example illustrating decode and forward physical layer network coding according to the state of the art. Nodes A and B need to exchange their packets (x and y, respectively) through a relay device R. Thus nodes A and B constitute a first and a second sending device which transmit their data through the relay device R. In conventional routing as shown in figure 1a nodes A and B send their packets into slots 1 and 2 respectively and then node R sends x to B in slot 3 and y to A in slot 4. Thus the exchange requires four slots. With network coding the relay R sends the sum of x and y as shown in figure 1b. Nodes A and B are then able to recover y and x respectively by computing the difference between the received packet (i.e. x + y) and the frame that they sent. This idea enables to reduce the number of transmissions from 4 to 3. The main aspect of this method is that nodes should be allowed to transmit functions of the received frames (such as for example the sum of x and y) rather than simply forwarding the received packets.

The network coding strategy has been further refined in the so called physical layer network coding as it is shown for example in figure 1c and as it is further described in

S. ZHANG, S. C. LIEW, P. P. LAM: "Hot Topic: Physical-Layer Network Coding" PROCEEDINGS OF ACM MOBICOM 2006, MOBICOM'06, 23 September 2006 (2006-09-23), - 26 September 2006 (2006-09-26) pages 358-365, XP002560037 Los Angeles, California, USA ISBN: 1-59593-286-0

and "P. Popovski and H. Yomo - The Anti-Packets Can Increase the Achievable Throughput of a Wireless Multi-Hop Network - IEEE ICC 2006, Istanbul (Turkey), June 2006". According to the scenarios of figure 1a and 1b nodes A and B would send their packets in different time slots. In physical layer network coding according to figure 1c A and B simultaneously transmit x and y. Thus these frames collide (i.e. they arrive roughly at the same moment) at relay R. The relay will then send a function of this signal such that A and B can recover y and x respectively since they know the other frame. Thus this method makes it possible to exchange the packets in two slots rather than three, with a 50 % increase in bandwidth with respect to network coding and 100 % with respect to conventional routing.

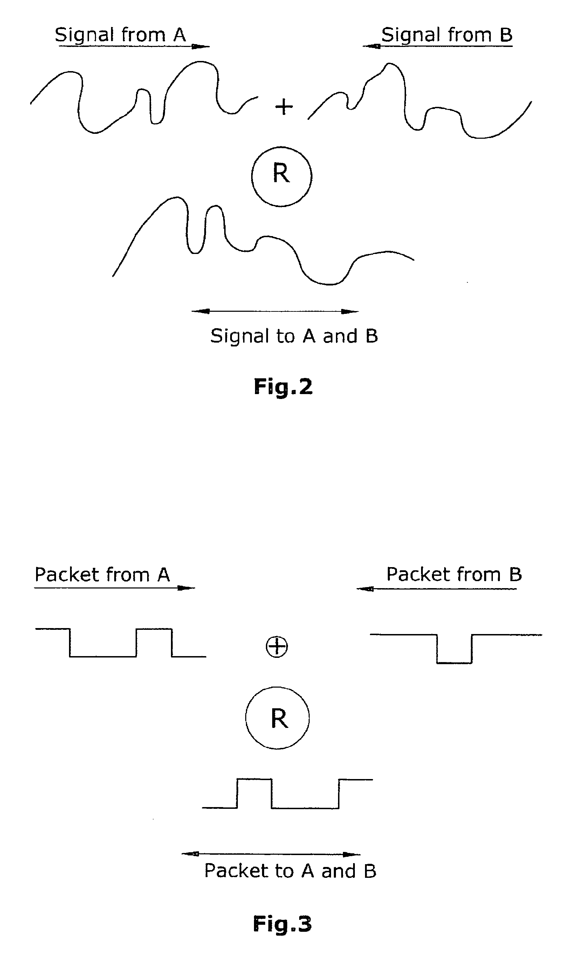

Two main methods can be used in the area of physical layer network coding. In the first, amplify and forward physical layer network coding (AF-PNC) as it is depicted in figure 2, the relay R transmits an amplified version of the analog signals of the collided packets. Thus relay R does not attempt to decode neither x nor y but this task is left to B and A respectively who subtract their own signal from what they receive from relay R. In decode and forward physical layer network coding (DF-PNC) as shown in figure 3 the relay R decodes a linear combination of x and y and transmits this packet. This means that the relay device multiplies x and y by two Galois numbers in the same field of x and y and sums them together. These Galois numbers are called network coding coefficients.

As it is described in "S. Katti, S. Gollakota and D. Katabi - Embracing wireless interference: Analog Network Coding - in ACM SIGCOMM 2007, Kyoto (Japan), Aug. 2007" AF-PNC is a simple concept and easier to implement in practice than DF-PNC, because the relay only has to forward the analog signal it has received. Thus the relay serves as a kind of a transparent repeater. In contrast to that in DF-PNC the intermediate node namely the relay R has to decode a packet out of the superposition of two frames and therefore must be more intelligent than in AF-PNC. However AF-PNC suffers from poor performance, because of the noise amplification inherent in it. It is also more vulnerable to channel estimation errors than DF-PNC, since the final receivers (A and B) must subtract an analog signal from what they receive from R. Imperfect channel estimates would affect this subtraction since an incorrect signal would be removed. Instead in DF-PNC A and B need to subtract their digital packets (x and y) and such process is always exact.

However even DF-PNC suffers from disadvantages. It has been shown that R should not decode x and y separately but instead should directly decode a linear combination of them from the received signal as described in "B. Nazer and M. Gastpar - Computation over multiple access channels - IEEE Transactions on Information Theory, vol. 53, no. 10, pp. 3498-3516, Oct. 2007". Otherwise performance could be even worse than AF-PNC. However systems that try to directly decode a linear combination from the collided signals at a relay R have so far been proposed for rather unrealistic cases with heavy assumptions as proposed by Nazer and Gastpar. In particular the following major impairments have not been solved yet:

First the colliding signals must be symbol and carrier synchronous, i.e. the colliding waveforms must arrive at the relay R with a relative delay which must be a small fraction of the symbol duration. Second the propagation environment must be frequency flat, i.e. frequency selective channels would not allow the state of the art systems of DF-PNC to work. Third the state of the art systems do not perform soft demodulation of the received signals. Instead they either deliver hard-decoded bits to the channel encoder (hence preventing to achieve the full performance of these systems) or they jointly carry out demodulation and channel decoding (thus incurring in significant computational complexity problems). However modern channel codecs (such as Low Density Parity Check Codes and Turbo Codes) need log likelihood ratios from the demodulator and not hard-decoded bits. In other words the probability that a certain bit has the value of 1 has to be known. A further problem in state of the art systems is that the colliding packets must arrive at the relay at the same time and with the same carrier phase.

Further relevant information concerning methods for transmitting data using i. a. physical layer network coding or OFDM, can be found in the following documents:

1. ANXIN LI ET AL: "An Enhanced Denoise-and-Forward Relaying Scheme for Fading Channel With Low Computational Complexity" IEEE SIGNAL PROCESSING LETTERS, IEEE SERVICE CENTER, PISCATAWAY, NJ, US, vol. 15, 1 January 2008 (2008-01-01), pages 857-860, XP011238396 ISSN: 1070-9908

2. GAO F ET AL: "On Channel Estimation for OFDM Based Two-Way Relay Networks" COMMUNICATIONS, 2009. ICC '09. IEEE INTERNATIONAL CONFERENCE ON, IEEE, PISCATAWAY, NJ, USA, vol. 1-14, 14 June 2009 (2009-06-14), pages 1-5, XP031506210 ISBN: 978-1-4244-3435-0

3. IANNELLO F ET AL: "Throughput analysis of type-I HARQ strategies in Two-Way Relay Channels" 18 March 2009 (2009-03-18), INFORMATION SCIENCES AND SYSTEMS, 2009. CISS 2009. 43RD ANNUAL CONFERENCE ON, IEEE, PISCATAWAY, NJ, USA, PAGE(S) 539 - 544 , XP031468662 ISBN: 9781424427338

4. MORELLI M: "Timing and Frequency Synchronization for the Uplink of an OFDMA System" IEEE TRANSACTIONS ON COMMUNICATIONS, IEEE SERVICE CENTER, PISCATAWAY, NJ, US, vol. 52, no. 2, 1 February 2004 (2004-02-01), pages 296-306, XP011108429 ISSN: 0090-6778

It is an object of the present invention to overcome the previously mentioned problems and in particular to provide a method for transmitting data using physical layer network coding in an environment subject to frequency selective fading and to asynchronous users.

This object is achieved by the features of claim 1.

In the method according to the invention a first sending device transmits a first data packet to a relay device and a second sending device transmits a second data packet to this relay device. The relay device decodes a linear combination of the received first and second data packet and transmits the decoded data to both the first and the second sending device. The first and the second sending device respectively subtract the first or second data packet from the decoded data received from the relay device so that the first sending device is able to recover the second data packet and the second sending device is able to recover the first data packet.

The invention is characterized in that Orthogonal Frequency Division Multiplexing Modulation (OFDM) is applied to the first and second data packet by the first and second sending device by appending a cyclic prefix and/ or a cyclic suffix to each data packet before transmitting it to the relay device. Two properties of OFDM are useful in this context: the presence of a cyclic prefix/suffix compensates for relative delays up to the duration of the prefix/suffix. In particular, if one packet is delayed with respect to the other, OFDM treats this delay as a propagation through a frequency selective channel, whose frequency response is dictated by the specific delay. In addition, a frequency selective channel (also not due to these delays but to the presence of a multipath wireless environment) is naturally handled by OFDM, since the multicarrier nature of OFDM is designed to overcome these impairments.

The inventive method works in the same setting as discussed above in relation with the state of the art, and hence must face the same impairments, namely for example that the packets are sent over a shared channel i.e. they may be transmitted in the same time and/ or frequency. Further the relay may receive many packets that collide in the same slot thereby causing mutual interference.

It is preferred that the relay device decides about the sampling instant, namely the point of time on which the first and second data packet are sampled. Thereby the sampling instant can be randomly chosen or can be chosen such that the minimum value of the frequency response of the channels of the colliding packets is maximized. On the other hand, simple heuristics can be adopted, such as tuning the sampling instant according to the temporal, rather than frequency, response of the channel. While not being optimal, some of these heuristics can perform close to the optimal choice. One option is to tune the sampling instant so that the minimum of the largest channel tap in each channel is maximised.

The cyclic prefix our suffix can be used by the relay device in order to compensate the relative relay between the colliding first and second data packet. Therefore the inventive method can be applied in an environment which is subject to asynchronous users.

According to the invention after OFDM Fast Fourrier Transformation or frequency equalization the relay device decodes the C most likely pairs of codewords, C being any nonzero integer number. In order to reduce the computational complexity to select these C most likely codewords one option is sphere decoding, which is a known method to perform ML vector detection at low computational complexity. This detection is necessary to perform soft decoding and hence provide soft input to modern channel codes. It is particularly preferred that the relay device selects as many network coding coefficients as the number of collided packets.

It is further preferred that the relay device computes the linear combinations corresponding to the C most likely pairs of codewords and computes the corresponding probabilities. For every bit in the linear combination the relay device can sum up the probabilities of those pairs of codewords that yield the same value for that bit. The detection of the C most likely codewords is necessary to perform the previous summation. Such process is called marginalization and is the key step that enables the direct decoding of the linear combination of x and y. Indeed, the detector is at the end oblivious of which specific packets x and y were sent, instead it just gives as an output the log likelihood ratios of the linear combination.

Preferably automatic repeat request is applied by using new and old signals for decoding if the first and second sending device send their data packets again. Therefore the inventive method can accommodate Hybrid ARQ.

In the following a preferred embodiment of the invention is described in combination with the figures.

Figure 1    shows a comparison between conventional routing, network coding and physical layer network coding,

Figure 2    shows the data transmission of the relay device in AF-PNC,

Figure 3    shows the transmission of the relay device in DF-PNC,

Figure 4    shows a block diagram of the proposed transceiver with OFDM, whereby each node A and B perform channel encoding,

Figure 5    shows a comparison of the bit error rate (BER) for the proposed DF-PNC ("midpoint digital"), for AF-PNC ("analog") and for synchronous DF-PNC ("synchronous digital") and

Figure 6    shows the optimal choice of the sampling interval for equal channels, whereby the minimum of the equivalent analog channels is the thick triangle.

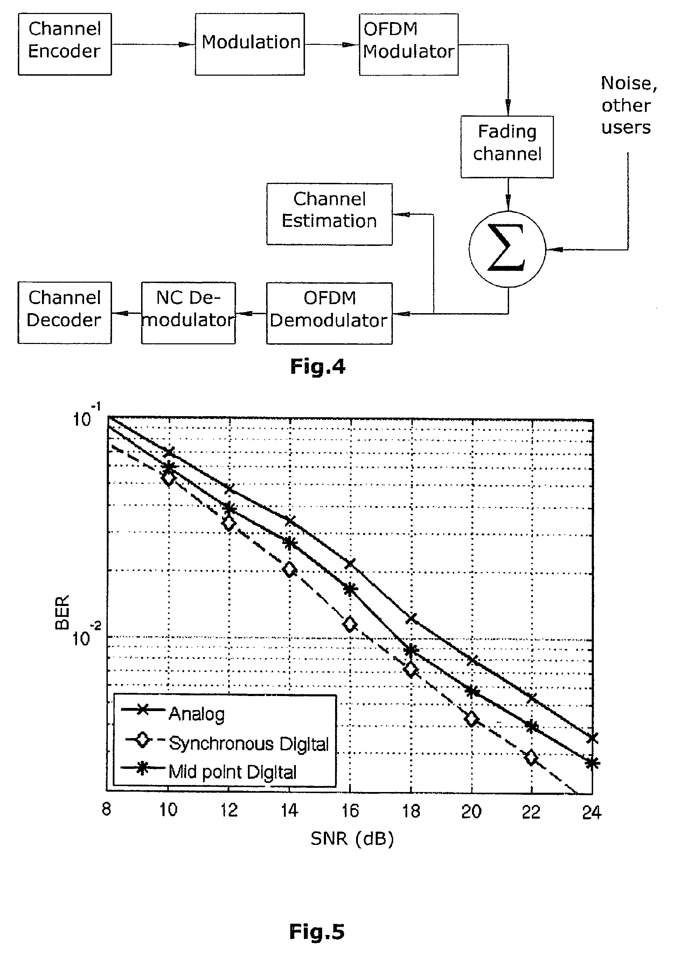

The system architecture is depicted in Fig. 4. The first step is channel coding, which is assumed to be an LDPC on $GF(2^b)$, b>0, b $\in$ **N,** but the system would also work with other codes (such as turbo or convolutional codes). A non-binary finite field can be important because first non binary codes are more general than (and sometimes also superior to) their binary counterparts and second this enables the usage of NC coefficients in a larger field than GF(2). The latter element is essential in more complicated and realistic networks than the Two Way Relay Channel (TWRC), since linear independence between different coded packets must be ensured. In the specific case of the TWRC, GF(2) is sufficient as far as network coding is concerned, since the relay just needs to send the XOR of X and Y. For this reason, the simulations in Section IV (which focus on the TWRC) adopt GF(2). We nonetheless remark that non-binary fields become essential in more general systems, leaving a more detailed investigation as a future work.

Let $X$ and $Y$ be the channel coded versions of X and Y, respectively. Each codeword is divided into blocks each with as many bits as an Orthogonal Frequency Division Multiplexing (OFDM) symbol needs. Every block is split into Galois symbols and each Galois symbol is turned into b bits and the coding phase is completed by mapping these bits into K M-ary QAM symbols $X_k$, $Y_k$, b=K $\log_2$(M), $0 \le k \le$ K-1, and performing OFDM modulation. All transmitters send their packets at the same time and hence the packets are linearly combined by the superposition on the wireless channel (as PNC requires).

Note that OFDM is a fundamental building block of this embodiment of the system and is essential for asynchronous PNC also in flat fading channels. Indeed, let us assume that Y is delayed with respect to X. Since Y's signal will not be symbol synchronous with X's symbols, Y's delay can be represented as a two-tap frequency selective channel. The easiest way nowadays to cope with such a behaviour is the usage of OFDM. As long as the relative delay D between X and Y is smaller than the cyclic prefix length CP, the channel is turned into a set of parallel flat fading channels. From another point of view, the two packets are slot synchronous but undergo a time varying channel $H_{i,n}$, i$\in$\{A, B\}, where $H_{i,n}$ is the frequency response of the channel impulse response $h_i$ as seen by the n-th subcarrier. Incidentally, the delay between the users generates a frequency selective channel and hence channel coding is even more essential because it enables to code over different fades and achieve frequency diversity.

The task of the receiver R is to compute a linear combination Z=$\alpha$X+$\beta$Y, where $\alpha$ and $\beta$ are arbitrary random coefficients in $GF(2^b)$, based on the overlapping signals received from A and B with no synchronization requirements. This highlights two properties of the inventive decoder: first, the algorithm can yield any linear combination of X and Y, without decoding these two frames separately. Second, all previous work exploited the fact that the waveforms of $X$ and $Y$ that correspond to the same symbols in the codewords exactly match in time. The inventive decoder computes the desired linear combination without this requirement. Since $\alpha$ and $\beta$ are scalars in the same field of the channel code, we also have that:

$$Z = GZ = G(\alpha X + \beta Y) = \alpha X + \beta Y$$

$$(1)$$

where G is the channel encoding matrix. The channel is estimated and OFDM demodulation is performed. After this step, the received signal $\rho = [\rho_0, \rho_1, ..., \rho_{K-1}]$ can be represented as follows:

$$\rho_k = H_{A,n(k)} X_k + H_{B,n(k)} Y_k + w_{n(k)}$$

$$(2)$$

where $W_{n(k)}$ is complex, zero mean, circularly symmetric AWGN noise with variance $\sigma^2$ per dimension. The sampling time is left arbitrary, i.e., the receiver does not optimally sample either X or Y, since their respective sampling times do not coincide, in general.

The heart of the decoding process is the NC demodulation. By NC demodulation we mean the process of directly estimating a linear combination $Z$ of the transmitted information units and performing soft decoding rather than hard decoding. Hence, the output is the sequence of log likelihood ratios of a desired linear combination of $X$ and $Y$. Note that the NC demodulation is carried out on a Galois symbol by Galois symbol basis. It is essential to directly decode $Z$, as opposed to separately estimating the individual frames ($X$ and $Y$ in the previous example). Note that A and B just need Z to recover the intended frames and hence R has to decode only $Z$ and not $X$ and $Y$ separately, thereby reducing the error probability.

For ease of notation, let us assume that $Z$, $X$ and $Y$ indicate a generic Galois symbol of the LDPC codeword, rather than the whole codeword. The key problem (which addresses the third goal exposed in Section 1) is how to produce the soft bits for $Z$. The output of the NC demodulator are the Log Likelihood Ratios (LLRs) for the Galois symbols that compose the coded packet. The computation of the LLRs is equivalent to the evaluation of the probability that $Z$ assumes one of its possible values $s_j \in \{0, 1, ..., 2^{b-1}\}$. These probabilities can be assessed as follows. First, let us assume that the a *posteriori* probability P[$(X, Y)|\rho$] of each ($X, Y$) pair has been computed. Then, P[$Z | \rho$] can be evaluated by marginalizing P[$(X, Y)|\rho$] over all ordered pairs ($X, Y$) that yield the same $Z$:

$$p_i = P[Z = s_i \mid \rho] = \sum_{X,Y : s_i = \alpha X + \beta Y} P[(X,Y) \mid \rho]$$

$$(3)$$

$$P[(X,Y) \mid \rho] = P[\rho \mid (X,Y)] \frac{P[(X,Y)]}{P(\rho)}$$

$$(4)$$

$$P[\rho \mid (X,Y)] \propto e^{-\frac{1}{2\sigma^2} \sum_{k=0}^{k-1} |\rho_k - H_{A,n(k)} X_k - H_{B,n(k)} Y_k|^2}$$

$$(5)$$

The term P[$(X, Y)$] (the prior) is considered to be uniform (i.e., P[$(X, Y)$]=$2^{-2b}$) and P($\rho$) is a constant, thus they will be neglected hereafter. Eq. 3 can be computed exactly only by exhaustive enumeration of all the $2^{2b}$ values of P[$(X, Y)|\rho$]. However, especially for large b, this is a hefty number. In addition, most of these probabilities are rather small, since P[$(X, Y)|\rho$]$\propto$ e$^{-d(\rho, X, Y)^2}$, where d(p, X, Y) is the Euclidean distance between the vector of received symbols p and the expected samples if ($X, Y$) were the transmitted symbols. The task of picking the C most likely pairs ($X, Y$) is equivalent to finding the closest couples (*X, Y*) to the received vector ρ, and such a task can be efficiently performed by means of soft-output sphere decoding. In particular, a slightly modified version of the method described in "B. M. Hochwald and S. ten Brink, - Achieving near-capacity on a multiple-antenna channel - IEEE Trans. Commun., vol. 51, no. 3, pp. 389 - 399, Mar. 2003" suited for this context is needed. First note that the constellation of valid points is $H_{A,n(k)} X_k + H_{B,n(k)} Y_k$, for all possible combinations of $X_k$, $Y_k$. We shall call this set the k-th expanded constellation.

The modified sphere decoder works as follows:

1 The algorithm defines a sphere radius r. Its output is the set of pairs (X, Y) such that:

$$\sum_{k=0}^{K-1}\left|\rho_k - H_{A,n(k)}X_k - H_{B,n(k)}Y_k\right|^2 < r^2$$

(6)

2 At any stage, the decoder keeps a list of the C pairs with smallest metric (6). If fewer than C pairs have been found so far (for instance at the beginning), the remaining elements in the list are fake placeholders with infinite metrics;

3 For the first signal sample $\rho_0$, the decoder finds all points in the expanded constellation for k=0 such that

$$\left|\rho_0 - H_{A,n(0)}X_0 - H_{B,n(0)}Y_0\right|^2 < r^2$$

4 For each such point, the decoder finds all elements of the expanded constellation for k=1 such that

$$\sum_{k=0}^{1}\left|\rho_k - H_{A,n(k)}X_k - H_{B,n(k)}Y_k\right|^2 < r^2$$

5 Repeat step 4 increasing the top index of the summation by one until the bottom is reached (k=K-1). At any moment inside the loop, if C pairs that satisfy (6) have been collected, assign to $r^2$ the metric of the furthest codeword among the C gathered so far. This observation makes condition (6) more and more stringent, thus pruning the set of possible candidates to evaluate.

After sphere decoding and marginalization (Eq. 3), the channel decoder is given Z's soft decoded bits. The reception is completed by conventional channel decoding.

In order to fully appreciate the importance of some architectural choices, a few remarks on the system design will be given below.

The previous Section argued that OFDM is necessary to cope with the asynchronous nature of PNC. We now quantify the improvement of the system robustness to the relative delay between X and Y, D, due to OFDM. First of all, we name the slot duration T. In slot synchronous DF-PNC it is reasonable to assume that the system works as long as D is one fifth of T because it is based on single carrier modulation. Such an estimate is based on the maximum tolerable delay spread in a single carrier system without equalization. Instead, in the proposed architecture, D must be smaller than CP. If N is the number of subcarriers, CP is usually NT/4 or NT/5. It is apparent that the maximum acceptable delay is about N times larger for the inventive system, and present wireless standards can employ, for instance, 64 subcarriers (like IEEE 802.11 as it is described in "IEEE Standards Department, ANSI / IEEE Standard 802.11, IEEE Press, 1999") or up to 2048 (as IEEE 802.16-2005 as it is described in "IEEE Standards Department, ANSI / IEEE Standard 802.16e, IEEE Press, 2005". This suggests that the inventive approach is about 2 or 3 orders of magnitude more resilient than conventional DF-PNC, just by using standard techniques in the right context. In addition we remark that the extension of DF-PNC to OFDM is not so obvious in this scenario, while being standard practice for the physical layer community. Indeed, OFDM is incompatible with some of the past DF-PNC architectures, such as lattice-based schemes. It has to be noted that OFDM naturally handles channels that are frequency selective. It is be noted that $T_1$ the delay spread of the i-th channel. The system can cope with an asynchronous system as long as $\max(T_0, D+T_1)$ is smaller than CP. Hence, a frequency selective channel reduces the system robustness to the delay between the users' packets, but can be accommodated into the inventive method in a very natural way, contrary to the other DF-PNC approaches.

Another important matter is that the NC demodulation process is performed before channel decoding. This should be the case, since the goal of this type of DF-PNC is to decode one rather than two packets. Hence, the channel decoder should be given as an input Z and not *X and Y* separately. In addition, the decoding of a single frame rather than two halves the computational burden on the channel decoder, while the cost is only (3) which implies just some fast additions. Incidentally, the marginalization in (3) reduces the error rate because multiple pairs (X, Y) contribute to the same Z. Moreover, it is important that in Eq. (1) the G matrix and the $\alpha, \beta$ coefficients can be swapped, so that to a certain linear combination of *X* and *Y* corresponds a linear combination with the same coefficients for X and Y. The Galois elements G and $\alpha, \beta$ can commute only if $\alpha, \beta$ belong to the same field of G. Hence, the field of the channel code is the limiting factor on the range of allowed linear combinations. For instance, if a binary code is used, the only possible value for $\alpha, \beta$ is 1, while 0 is undesirable (it would imply not to consider one or both of the packets).

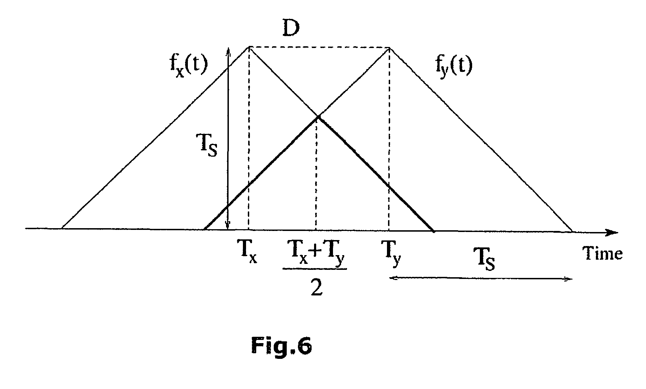

The choice of the sampling time is left arbitrary. Such a decision is rather important: given a certain wireless channel in the analog domain, its energy in the digital domain (i.e., the sum of the squares of the absolute values of its samples) depends on the choice of the sampling time. For instance, if the shaping pulse is a rectangular waveform with unit amplitude and an ideal identity propagation channel is assumed, the waveforms $f_x(t), f_y(t)$ at the output of the matched filtered (for X and Y respectively) have a triangular shape (Fig. 6). If each signal is optimally sampled (at its peak), the energy of each digital channel is $T_s^2$, while if they are sampled with an offset of $T_s/2$ the energy is just $T_s^2/2$. Since the two packets cannot be simultaneously optimally sampled, this loss of energy implies a Signal-to-Noise-Ratio (SNR) reduction which does not exist in conventional (synchronous) DF-PNC techniques. The optimization of such a choice is left as a topic for future work, but we propose the following simple heuristic: if the optimal sampling times for X and Y are $T_x+jT_s$, $T_y+jT_s$ (j being an integer number) respectively, we propose to use $(T_x+T_y)/2+jT_s$. This is a very simple choice which yields satisfactory results, as it will be shown below. Furthermore, this strategy does not unfairly penalize either X or Y and actually attempts to maximize the minimum energy of $h_A$ and $h_B$ on average (i.e., assuming equal received powers). This is useful because it can be shown by a straightforward pairwise error probability analysis that the detection errors due to the weaker channel are those that dominate the error probability. We note that in the previous example of equal received powers and rectangular shaping pulses, the sampling time $(T_x+T_y)/2$ does maximize the minimum energy (Fig. 6).

The major advantages of the invention are that the inventive method improves the robustness of DF-PNC with respect to frequency selective fading and further with respect to the relative delay between the time of arrival of the different packets at the gateway or relay device R. Further the inventive method makes it possible to obtain soft output values of the decoded linear combination in DF-PNC. It is further made possible to directly decode any linear combination of the collided packets.

Figure 5 is a performance example showing the bit error rate (BER) after channel decoding for the scenario of figure 1c is computed. A and B transmit their packets to the relay device R and the relay must correctly decode a linear combination. The bit error rate is evaluated by comparing the decoded against the expected linear combination of the collided packets.

The proposed DF-PNC has been compared to the AF-PNC as it is described in "S. Katti, S. Gollakota and D. Katabi - Embracing wireless interference: Analog Network Coding - in ACM SIGCOMM 2007, Kyoto (Japan), Aug. 2007". Although further improvement might be achieved the benchmark practical PNC architecture has been outperformed. In addition to the performance improvements other advantages have been obtained. For example DF-PNC is more robust to channel estimation errors since in AF-PNC the interference cancellation process is subject to these errors. Instead DF-PNC is not affected because A and B subtract their own digital packet x and y respectively rather than the estimate of the amplified analog signal at R. Moreover AF-PNC requires oversampling to yield satisfactory performance whereas the inventive method still achieves good results without it. Further AF-PNC can transmit only a signal proportional to the sum of the colliding packets. Instead DF-PNC can potentially yield any linear combination and this flexibility is beneficial for network coding in realistic topologies. Finally AF-PNC does not work in frequency selective channels while the inventive method naturally accommodates these environments because of OFDM.

The inventive method can be applied in all types of commercial wireless systems. It is particularly preferred to apply the invention to interactive two way services like DVD-RCS.

**Claims**

1. A method for transmitting data using physical layer network coding, whereby
at least one first sending device (A) transmits a first data packet to a relay device (R),

at least one second sending device (B) transmits a second data packet to a relay device (R),

the relay device (R) decodes a linear combination of the received first and second data packets, whereby this decoding comprises network coding demodulation consisting in directly estimating a linear combination of the received data packets and in outputting the log likelihood ratios of the estimated linear combination and the relay device (R) further transmits the decoded data to both the first and the second sending device (A,B),

the first and the second sending devices (A, B) respectively subtract the first or second data packet from the decoded data received from the relay device (R), so that the first sending device (A) is able to recover the second data packet and the second sending device (B) is able to recover the first data packet,

whereby

orthogonal frequency division multiplexing modulation is applied to the first and second data packet by the first and second sending device (A, B) by appending a cyclic prefix and/ or a cyclic suffix to each data packet before transmitting it to the relay device (R),

**characterized in that**

after OFDM-fast fourrier Transformation or frequency equalization, the decoding performed by the relay device (R) further includes determining the C most likely pairs of codewords, the codewords being the channel coded versions of the first and second data packets, C being any nonzero integer number, whereby in order to reduce the computational complexity to select these C most likely codewords, near maximum likelihood vector detection at low computational complexity is performed based on soft output sphere decoding.

2. A method according to claim 1, whereby the relay device (R) decides about the sampling instant, namely the point of time on which the first and second data packet are sampled.

3. A method according to claim 2, whereby the sampling instant is randomly chosen.

4. A method according to claims 1 to 3, whereby the cyclic prefix or suffix is used by the relay device (R) in order to compensate the relative delay between the colliding first and second data packet.

5. A method according to claims 1 to 4, whereby the relay device (R) computes the linear combinations corresponding to the C most likely pairs of codewords and computes the corresponding probabilities.

6. A method according to claim 5, whereby for every bit in the linear combination the relay device (R) sums up the probabilities of those pairs of codewords that yield the same value for that bit.

7. A method according to claims 1 to 6, whereby the relay device (R) selects as many network coding coefficients as the number of collided packets.

8. A method according to claims 1 to 7, whereby channel coding is used and the Galois field of the channel code has a size no smaller than the Galois field of the network coding coefficients.

9. A method according to claims 1 to 8, whereby puncturing is applied to the coded bits produced by the sending devices (A) and (B).

10. A method according to claims 1 to 9, whereby automatic repeat request is applied by using new and old signals for decoding when the first and second sending device (A, B) send their data packets again.

**Patentansprüche**

1. Verfahren zur Datenübertragung unter Verwendung von Physical-Layer-Network-Coding bei welchem

mindestens eine erste Sendevorrichtung (A) ein erstes Datenpaket an eine Relaisvorrichtung (R) überträgt,

mindestens eine zweite Sendevorrichtung (B) ein zweites Datenpaket an eine Relaisvorrichtung (R) überträgt,

die Relaisvorrichtung (R) eine lineare Kombination der empfangenen ersten und zweiten Datenpakete dekodiert, wobei dieses Dekodieren eine Network-Coding-Demodulation beinhaltet, welche aus dem direkten Schätzen einer linearen Kombination der empfangenen Datenpakete und aus dem Ausgeben der Log-Likelihood-Verhältnisse der geschätzten linearen Kombination besteht, und die Relaisvorrichtung (R) die kodierten Daten an sowohl die erste als auch die zweite Sendevorrichtung (A, B) überträgt,

die erste und die zweite Sendevorrichtung (A, B) jeweils das erste oder das zweite Datenpaket von den dekodierten Daten, welche sie von der Relaisvorrichtung (R) empfangen haben, subtrahieren, so dass die erste Sendevorrichtung (A) in der Lage ist, das zweite Datenpaket wiederherzustellen, und die zweite Sendevorrichtung (B) in der Lage ist, das erste Datenpaket wiederherzustellen,

wobei

durch die erste und die zweite Sendevorrichtung (A, B) auf das erste und das zweite Datenpaket eine Orthogonal-Frequency-Division-Multiplexing-Modulation angewendet wird, indem an jedes Datenpaket vor dessen Übertragung an die Relaisvorrichtung (R) ein zyklisches Präfix und/oder ein zyklisches Suffix angehängt wird,

**dadurch gekennzeichnet, dass**

nach einer OFDM-Fast-Fourier-Transformation oder Frequenzentzerrung, die von der Relaisvorrichtung (R) vorgenommene Dekodierung ferner das Bestimmen der C wahrscheinlichsten Codewortpaare aufweist, wobei es sich bei den Codewörtern um die kanalkodierten Versionen der ersten und der zweiten Datenpakete handelt, wobei C eine beliebige von Null verschiedene ganze Zahl ist, wobei zur Verringerung der Berechnungskomplexität der Auswahl dieser C wahrscheinlichsten Codewörter eine Near-Maximum-Likelihood-Vektorerkennung mit geringer Berechnungskomplexität basierend auf Soft-Output-Sphere-Decoding durchgeführt wird.

2. Verfahren nach Anspruch 1, bei welchem die Relaisvorrichtung (R) über den Abtastmoment, nämlich den Zeitpunkt, zu dem das erste und das zweite Datenpaket abgetastet werden, entscheidet.

3. Verfahren nach Anspruch 2, bei welchem der Abtastmoment zufällig gewählt wird.

4. Verfahren nach den Ansprüchen 1 bis 3, bei welchem das zyklische Präfix oder Suffix von der Relaisvorrichtung (R) verwendet wird, um die relative Verzögerung zwischen den kollidierenden ersten und zweiten Datenpaketen zu kompensieren.

5. Verfahren nach den Ansprüchen 1 bis 4, bei welchem die Relaisvorrichtung (R) die den C wahrscheinlichsten Codewortpaaren entsprechenden linearen Kombinationen berechnet und die entsprechenden Wahrscheinlichkeiten berechnet.

6. Verfahren nach Anspruch 5, bei welchem die Relaisvorrichtung (R) für jedes Bit in der linearen Kombination die Wahrscheinlichkeiten derjenigen Codewortpaare summiert, welche den gleichen Wert für diese Bit ergeben.

7. Verfahren nach den Ansprüchen 1 bis 6, bei welchem die Relaisvorrichtung (R) so viele Netzwerkverschlüsselungskoeffizienten wählt wie der Anzahl der kollidierten Pakete entsprechen.

8. Verfahren nach den Ansprüchen 1 bis 7, bei welchem Kanalkodierung verwendet wird und das Galois-Feld des Kanalcodes eine Größe aufweist, die nicht geringer als diejenige des Galois-Felds der Netzwerkverschlüsselungskoeffizienten ist.

9. Verfahren nach den Ansprüchen 1 bis 8, bei welchem auf die von den Sendevorrichtungen (A) und (B) erzeugten kodierten Bits eine Punktierung angewendet wird.

10. Verfahren nach den Ansprüchen 1 bis 9, bei welchem eine automatische Wiederholungsanforderung ausgeführt wird, indem neue und alte Signale für das Dekodieren verwendet werden, wenn die erste und die zweite Sendevorrichtung (A, B) ihre Datenpakete erneut senden.

**Revendications**

1. Procédé de transmission de données utilisant un codage de réseau à couche physique, par lequel

au moins un premier dispositif de transmission (A) transmet un premier paquet de données à un dispositif relais (R),

au moins un second dispositif de transmission (B) transmet un second paquet de données à un dispositif relais

le dispositif relais (R) décode une combinaison linéaire du premier et second paquets de données reçus, de sorte que ce décodage comporte le fait de à démoduler le codage de réseau consistant en une estimation directe d'une combinaison linéaire des paquets de données reçus et de délivrer les taux de vraisemblance sur la liste de contrôle de la combinaison linéaire estimée et le dispositif relais (R) transmet, de plus, les données décodées à la fois au premier et au second dispositif de transmission (A,B),

les premier et second dispositifs de transmission (A, B) soustraient, respectivement, le premier ou le second paquet de données des données décodées reçues à partir du dispositif relais (R), de telle sorte que le premier dispositif de transmission (A) est capable de récupérer le second paquet de données et que le second dispositif de transmission (B) est capable de récupérer le premier paquet de données,

de sorte que

une modulation à multiplexage par répartition en fréquences orthogonales est appliquée au premier et au second paquets de données par le premier et par le second dispositifs de transmission (A, B) en ajoutant un préfixe cyclique et/ou un suffixe cyclique à chaque paquet de données avant de le transmettre au dispositif relais (R), **caractérisé en ce que**

après une transformation de Fourrier OFDM rapide ou après une égalisation de fréquence, le décodage exécuté par le dispositif relais (R) inclut, de plus, de déterminer les C paires les plus vraisemblables de mots de code , les mots de code étant les versions codées de canal des premier et second paquets de données, C étant un nombre entier quelconque non nul, de sorte qu'afin de réduire la complexité de calcul pour sélectionner ces C mots de code les plus vraisemblables , une détection de vecteur proche de la vraisemblance maximale au niveau d'une faible complexité de calcul est exécutée sur la base d'un décodage dans une sphère de sortie programmable.

2. Procédé selon la revendication 1, tel que le dispositif relais (R) décide de l'instant d'échantillonnage, à savoir du moment auquel les premier et second paquets de données sont échantillonnés.

3. Procédé selon la revendication 2, dans lequel le moment de l'échantillonnage est choisi de façon aléatoire.

4. Procédé selon les revendications 1 à 3, dans lequel le préfixe cyclique ou le suffixe cyclique est utilisé par le dispositif relais (R) afin de compenser le délai relatif entre l'entrée en collision des premier et second paquets de données.

5. Procédé selon les revendications 1 à 4, dans lequel le dispositif relais (R) calcule les combinaisons linéaires correspondant aux C paires les plus vraisemblables de mots de code et calcule les probabilités correspondantes.

6. Procédé selon la revendication 5, dans lequel pour chaque binaire de la combinaison linéaire le dispositif relais (R) somme les probabilités de ces paires de mots de code qui produisent la même valeur pour ce binaire.

7. Procédé selon les revendications 1 à 6, dans lequel le dispositif relais (R) sélectionne autant de coefficients de codage de réseau que le nombre de paquets entrés en collision.

8. Procédé selon les revendications 1 à 7, dans lequel un codage de canal est utilisé et dans lequel le champ de Galois du code de canal présente une dimension qui n'est pas inférieure au champ de Galois des coefficients de codage de réseau.

9. Procédé selon les revendications 1 à 8, dans lequel une coupure est appliquée aux binaires codés produits par les dispositifs de transmission (A) et (B).

10. Procédé selon les revendications 1 à 9, dans lequel une requête de répétition automatique est appliquée en utilisant des signaux nouveaux et anciens pour un décodage lorsque les premier et second dispositifs de transmission (A, B) transmettent de nouveau leurs paquets de données.

$$X_1 \qquad Y_2$$

$$A \qquad R \qquad B$$

$$Y_4 \qquad X_3$$

a) Traditional Routing

$$X_1 \qquad Y_2$$

$$A \qquad R \qquad B$$

$$X \oplus Y_3$$

b) Digital Network Coding

$$X + Y_1$$

$$A \qquad R \qquad B$$

$$f(x+y)/g(x,y)_2$$

c) Physical layer Network Coding

**Fig.1**

Signal from A

Signal from B

+

R

Signal to A and B

**Fig.2**

Packet from A

Packet from B

⊕

R

Packet to A and B

**Fig.3**

**Fig.4**

**Fig.5**

**Fig.6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. ZHANG ; S. C. LIEW ; P. P. LAM.** Hot Topic: Physical-Layer Network Coding. *PROCEEDINGS OF ACM MOBICOM 2006,* 23 September 2006, ISBN 1-59593-286-0, 358-365
- **P. POPOVSKI ; H. YOMO.** *The Anti-Packets Can Increase the Achievable Throughput of a Wireless Multi-Hop Network - IEEE ICC 2006,* June 2006
- **S. KATTI ; S. GOLLAKOTA ; D. KATABI.** *Embracing wireless interference: Analog Network Coding - in ACM SIGCOMM 2007,* August 2007
- **B. NAZER ; M. GASTPAR.** Computation over multiple access channels. *IEEE Transactions on Information Theory,* October 2007, vol. 53 (10), 3498-3516
- **ANXIN LI et al.** An Enhanced Denoise-and-Forward Relaying Scheme for Fading Channel With Low Computational Complexity. *IEEE SIGNAL PROCESSING LETTERS,* 01 January 2008, vol. 15, ISSN 1070-9908, 857-860
- **GAO F et al.** On Channel Estimation for OFDM Based Two-Way Relay Networks. *COMMUNICATIONS, 2009. ICC '09. IEEE INTERNATIONAL CONFERENCE ON, IEEE,* 14 June 2009, vol. 1-14, ISBN 978-1-4244-3435-0, 1-5
- **IANNELLO F et al.** Throughput analysis of type-I HARQ strategies in Two-Way Relay Channels. *INFORMATION SCIENCES AND SYSTEMS, 2009. CISS 2009. 43RD ANNUAL CONFERENCE ON, IEEE,* 18 March 2009, ISBN 9781424427338, 539-544
- **MORELLI M.** Timing and Frequency Synchronization for the Uplink of an OFDMA System. *IEEE TRANSACTIONS ON COMMUNICATIONS,* 01 February 2004, vol. 52 (2), ISSN 0090-6778, 296-306
- **B. M. HOCHWALD ; S. TEN BRINK.** Achieving near-capacity on a multiple-antenna channel. *IEEE Trans. Commun.,* March 2003, vol. 51 (3), 389-399
- **S. KATTI ; S. GOLLAKOTA ; D. KATABI.** Embracing wireless interference: Analog Network Coding. *ACM SIGCOMM 2007,* August 2007